(19) Europäisches Patentamt

European Patent Office

Office européen des brevets

(11) **EP 0 995 722 A1**

(12) **EUROPÄISCHE PATENTANMELDUNG**

(43) Veröffentlichungstag:
26.04.2000 Patentblatt 2000/17

(51) Int. Cl.[7]: **C03B 23/037**

(21) Anmeldenummer: **99120392.8**

(22) Anmeldetag: **13.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.10.1998 DE 19848083**

(71) Anmelder:
**FRAUNHOFER-GESELLSCHAFT ZUR FÖRDERUNG DER ANGEWANDTEN FORSCHUNG E.V.**
**80636 München (DE)**

(72) Erfinder:
• **Krauss, Manfred Dr.**
  **D-07749 Jena (DE)**
• **Krolla, Hans-Georg**
  **D-55122 Mainz (DE)**
• **Durschang, Bernhard.R. Dr.**
  **D-97072 Würzburg (DE)**
• **Hussmann, Eckart Dr.**
  **D-55270 Ober-Olm (DE)**
• **Müller, Gerd  Prof. Dr.**
  **D-97084 Wüzburg (DE)**

(74) Vertreter: **Gagel, Roland, Dr.**
**Patentanwalt Dr. Roland Gagel,**
**Landsberger Strasse 480a**
**81241 München (DE)**

(54) **Verfahren zur Herstellung von Interferenzschichtfolgen**

(57)     Die Erfindung betrifft ein neuartiges Verfahren zur Herstellung von Interferenzschichtfolgen.

Bei dem Verfahren wird ein Stapel (1) aus zumindest zwei Schichten i, die aus unterschiedlichen Gläsern bzw. Glassorten bestehen, mit den gleichen Brechungsindizes $n(i)$ und der gleichen Schichtabfolge wie in der herzustellenden Interferenzschichtfolge bereitgestellt. Die Dicken $d_0(i)$ der Schichten des Stapels (1) werden so gewählt, daß sie um jeweils den gleichen Faktor größer als die vorbestimmten Dicken $d(i)$ der Schichten der herzustellenden Interferenzschichtfolge sind. Der Stapel (1) wird auf eine Temperatur oberhalb der Transformationstemperatur der Gläser erwärmt und derart ausgezogen, daß die einzelnen Schichten die vorbestimmten Dicken $d(i)$ erreichen.

Die einzelnen Glasschichten können hinsichtlich Dicke und Brechzahl mit höchster Präzision hergestellt werden, so daß jedes gewünschte Interferenzverhalten der Interferenzschichtfolge definiert eingestellt werden kann.

EP 0 995 722 A1

**Beschreibung**

Die Erfindung betrifft ein neuartiges Verfahren zur Herstellung von Interferenzschichtfolgen. Mit dem erfindungsgemäßen Verfahren können Interferenzschichtsysteme unterschiedlichsten Aufbaus hergestellt werden, die für viele verschiedene Anwendungen dienen können. Diese Interferenzschichtsysteme eignen sich insbesondere als Filter, als Interferenzpigmente oder als Teilchen für die Einbettung in Dokumente zur Erhöhung der Fälschungssicherheit.

Interferenzschichtsysteme bestehen aus einer beliebigen Anzahl von Schichten mit mindestens zwei unterschiedlichen Brechungsindizes und Schichtdicken, die in der Regel kleiner als die betreffenden Lichtwellenlängen sind. Interferenzschichten finden vor allem Anwendung als Antireflexschichten, Reflexionsschichten, Interferenzpigmente, Strahlenteiler, Kantenfilter, Linienfilter und Minusfilter.

Zur Herstellung von Interferenzschichtsystemen sind verschiedene Verfahren bekannt. Es handelt sich bei diesen Verfahren in der Regel um Beschichtungsverfahren. So werden sowohl chemische Verfahren, wie beispielsweise Sol-Gel-Beschichtungsverfahren, Sprühverfahren, Oberflächenreduktionsverfahren oder CVD (Chemical Vapor Deposition), als auch physikalische Verfahren, wie beispielsweise Bedampfungsverfahren oder Sputtern, zur Herstellung von Interferenzschichten eingesetzt. Als Beschichtungs- und als Substratmaterialien stehen eine große Palette von hoch- und niedrigbrechenden Materialien zur Verfügung.

Interferenzpigmente für perlmuttartigen oder metallischen Glanz in Lacken, Farben oder Kosmetika werden vorwiegend durch Beschichtung von plättchenförmigen Glimmerkristallen mit $TiO_2$ oder anderen Metalloxiden hergestellt (siehe z.B. US-3553001 oder US-3331699). Auch kohlenstoffhaltige Schichten und basische organische Farbmittel werden als Beschichtung aufgebracht (siehe z.B. EP-0634458 oder DE-4225357). Dabei werden als Substrate Glimmerplättchen mit einem Durchmesser 100 bis 500 μm und einer Dicke von 0,1 bis 10 μm verwendet, die zunächst mühevoll aus dem natürlich vorkommenden Glimmer gewonnen werden müssen, wobei die Ausbeute bei unter 10% liegt.

Als Substrate für Interferenzbeschichtungen werden auch andere Materialien eingesetzt, wie z.B. $PbSO_4$, hexagonale $Fe_2O_3$-Plättchen (Durchmesser 5 bis 50 μm) und Graphit. In der US-5436077 wird auch die Verwendung von Glasteilchen als Substrate beschrieben, auf denen eine Metallschicht und eine diese bedeckende Schutzschicht abgeschieden werden.

Perlmutt- und Metallglanzpigmente auf Glimmerbasis sind jedoch am weitesten verbreitet und beherrschen über 80 % des Weltmarktes.

Im Stand der Technik ist auch das Beschichten organischer Substrate mit $TiO_2$ oder $ZrO_2$ (siehe ZA-6805748) oder das Beschichten organischer Formteile auf Basis von Polyesterharzen (siehe EP-742262) beschrieben, um Interferenzpigmente herzustellen. Die thermische und mechanische Beständigkeit dieser Interferenzpigmente erfüllt jedoch in den meisten Fällen nicht die an sie gestellten Ansprüche.

Ein Nachteil aller bekannten Verfahren und Beschichtungsmaterialien besteht jedoch in der ungenügenden Präzision bei der Einhaltung von Brechzahlen und Dicken der Schichten, so daß die erwünschte Interferenzwirkung in vielen Fällen nicht erreicht wird. Besonders die Brechzahlen lassen sich aufgrund der eingesetzten Beschichtungstechniken nur sehr ungenügend einhalten. Die Herstellung der Interferenzschichtfolgen ist außerdem aufwendig und benötigt viele unterschiedliche Verfahrensschritte, von denen jeder zu Fehlern führen kann und das gesamte Verfahren verteuert. Weiterhin gehen bei diesen Verfahren und Materialien große Mengen der schichtbildenden Materialien verloren.

Bei den mit diesen konventionellen Herstellungsprozessen gefertigten Interferenzschichtsystemen sind die Schichten außerdem nicht völlig porenfrei zu erhalten, so daß sich die spektralen Eigenschaften ändern können, indem sich Wasserdampf und andere Gase in die Poren der Filter einlagern. Bei Erwärmung ändert sich die Gasbeladung dieser Interferenzschichtsysteme erneut, so daß die spektralen Eigenschaften wie Reflexion und Transmission variieren. Bei ungünstigen Verhältnissen, z.B. aufgrund von Umwelteinflüssen, können sich die aufgebrachten Beschichtungen auch vom Substrat lösen.

Ein weiteres Verfahren zur Herstellung von Interferenzschichtfolgen ist in der US-3711176 beschrieben. Bei diesem Verfahren werden hochreflektierende farbige Kunststoffilme aus mehreren transparenten, thermoplastischen Kunststoffschichten durch gleichzeitiges Extrudieren hergestellt.

Die resultierenden Schichtsysteme eignen sich jedoch aufgrund der ungenügenden Genauigkeit bei der Einhaltung der Brechungsindizes und der Schichtdicken dieser Materialien in der Regel nur zur Erzielung besonderer optischer Effekte an Oberflächen. Es steht außerdem nur eine geringe Variationsbreite der Brechungsindizes von Thermoplasten zur Verfügung, so daß die Möglichkeiten der Erzeugung einer gezielten Interferenzwirkung stark eingeschränkt sind. Die eingesetzten Materialien sind zudem thermisch, mechanisch, chemisch und gegenüber Umwelteinflüssen, zum Beispiel UV-Strahlung, wenig belastbar.

Die Aufgabe der vorliegenden Erfindung besteht darin, ein Verfahren zur Herstellung einer Interferenzschichtfolge anzugeben, das es ermöglicht präzise und beständige Interferenzschichtsysteme kostengünstig herzustellen. Weiterhin soll eine derart herstellbare Interferenzschichtfolge bereitgestellt werden.

Die Aufgabe wird mit dem Verfahren nach Anspruch 1 sowie der Interferenzschichtfolge nach Anspruch 18 gelöst. Vorteilhafte Ausgestaltungen des Verfahrens sind Gegenstand der Unteransprüche. Ein Zwischenprodukt, das bei einer Ausführungsform des Verfahrens anfällt, ist in Anspruch 17 angegeben.

Das erfindungsgemäße Verfahren ermöglicht die präzise und kostengünstige Herstellung von Interferenzschichtfolgen aus mehreren Schichten i vorbestimmter Dicken d(i) und Brechungsindizes n(i), beispielsweise einer Schichtfolge aus den Schichten 1 (i=1) und 2 (i=2) mit unterschiedlichen Dicken d(1), d(2) und unterschiedlichen Brechungsindizes n(1) und n(2).

Erfindungsgemäß wurde hierbei erkannt, daß die Herstellung einer derartigen Interferenzschichtfolge nicht mit den üblichen Beschichtungstechniken oder Materialien, sondern durch die Verwendung von Glas als Schichtmaterial in Verbindung mit den folgenden Verarbeitungsschritten in sehr vorteilhafter Weise realisiert werden kann.

Bei dem Verfahren wird zunächst ein Stapel aus zumindest zwei Glasschichten i, die aus unterschiedlichen Gläsern bzw. Glassorten bestehen, mit den gleichen Brechungsindizes n(i) und der gleichen Schichtabfolge wie in der herzustellenden Interferenzschichtfolge bereitgestellt. Die Dicken $d_0(i)$ der Schichten des Stapels werden so gewählt, daß sie um jeweils den gleichen Faktor größer als die vorbestimmten Dikken d(i) der Schichten der herzustellenden Interferenzschichtfolge sind. Diese Parameter lassen sich gerade bei Glasmaterialien in hervorragender Weise einhalten.

Der Stapel wird schließlich auf eine Temperatur oberhalb der Transformationstemperatur der Gläser der Schichten erwärmt und - anschließend oder gleichzeitig - derart ausgezogen, daß die einzelnen Schichten die vorbestimmten Dicken d(i) erreichen. Anschließend wird der ausgezogene Stapel abgekühlt.

Überraschenderweise verschmelzen bei dem Ausziehen die einzelnen Glasschichten nicht derart miteinander, daß sie ihre ursprünglichen Eigenschaften verlieren. Vielmehr bleiben sowohl die Brechungsindizes als auch das Verhältnis der Schichtdicken selbst bei großflächigen Schichten exakt erhalten. Die Schichten verschmelzen nur an den Berührungsflächen miteinander, so daß dadurch eine sehr vorteilhafte feste Verbindung zwischen den einzelnen streng definierten Schichten entsteht.

In einer bevorzugten Ausführungsform des erfindungsgemäßen Verfahrens wird der Stapel als eine sogenannte "Preform" bereitgestellt. Diese Preform besteht aus einem Paket von Glasplatten, deren Brechungsindizes n(i) und Dicken $d_0(i)$ gemäß den obigen Bedingungen geeignet gewählt sind. Die Preform wird bei Temperaturen oberhalb der Transformationstemperatur so ausgezogen, daß die Glasplatten an ihren Berührungsflächen miteinander verschmelzen und die Dicken der einzelnen Gläser auf das gewünschte Maß reduziert werden.

Vereinfachend könnte man auch sagen, daß bei dem erfindungsgemäßen Verfahren das Ausgangspaket - die Preform - einer Ähnlichkeitstransformation unterzogen wird, wobei die Ausgangsdicken $d_0(i)$ und Ausgangsbreiten $b_0(i)$ unter Beibehaltung der Brechungsindizes um einen konstanten Faktor reduziert werden. Die nach dem Ziehvorgang entstehende Fläche (parallel zur Schichtung) ist um diesen Faktor vergrößert.

Die Einstellung der vorbestimmten Dicken d(i) erfolgt vorzugsweise über die Geschwindigkeit des Ausziehens. Diese kann für jede gewünschte Dickenreduzierung exakt vorberechnet werden.

Die optischen Dicken n(i) • d(i) der einzelnen Glasplatten i werden in der Regel so gewählt, daß jeweils, je nach gewünschter Interferenzwirkung, λ/4-Schichten oder Mehrfache davon entstehen.

In einer weiteren Ausgestaltung des erfindungsgemäßen Verfahrens wird während des Ausziehens die Ausziehgeschwindigkeit schrittweise oder kontinuierlich verändert. Hierdurch lassen sich aus einem einzigen Stapel hintereinander Interferenzschichtfolgen unterschiedlicher Dicken, d.h. mit unterschiedlichen spektralen Eigenschaften, erzeugen. Bei kontinuierlicher Erhöhung der Ausziehgeschwindigkeit kann auch eine Interferenzverlaufsschichtfolge mit kontinuierlicher Änderung der Schichtdicken über die Ausziehlänge gefertigt werden.

Alternativ kann der bereitgestellte Stapel zur Erzeugung eines Interferenzverlaufsfilters auch bereits einen vorgegebenen Dickenverlauf der Schichten quer zur Richtung des Ausziehens aufweisen, wobei das Ausziehen dann mit konstanter Geschwindigkeit erfolgen kann.

In einer vorteilhaften Ausführungsform setzt sich die dem Ausziehschritt unterworfene Preform bereits aus mehreren Einzelpreformen zusammen, die jeweils die Schichtstapel einer einzelnen Interferenzschichtfolge enthalten. Die Einzelpreformen sind hierbei durch Zwischenschichten aus löslichen thermoplastischen Materialien, vorzugsweise Gläsern, voneinander getrennt. Unter löslichen Materialien sind hierbei solche Schichtmaterialien zu verstehen, die in einer, beispielsweise wäßrigen oder säurehaltigen, Lösung löslich sind, in der die Gläser der anderen Schichten nicht gelöst werden. Beispiele für derartige Material-/Lösungsmittel-Kombinationen sind Borosilicatgläser, die im schwach sauren Medium löslich sind. Die Zwischenschichten werden nach dem Abkühlen der ausgezogenen Preform in dem geeigneten Lösungsmittel gelöst, so daß die einzelnen Interferenzschichtfolgen voneinander getrennt werden.

Die Trenngläser der Zwischenschichten können pulvertechnologisch oder über Siebdruckverfahren aufgebracht werden.

Dies gilt auch für Schichten der Interferenzschichtsysteme, wobei vorzugsweise so vorgegangen werden sollte, daß entweder das hoch- oder niedrigbrechende Glas für die Preform als dünnes Glas vorliegt, und dann das jeweils andere Glas mittels Siebdruck oder pulvertechnologisch darauf aufgebracht wird. Das als Fritte aufgebrachte Glas muß durch eine Wärmebehandlung in eine transparente, gleichmäßige Schicht umgewandelt werden. Dies kann vor dem Zusammenfügen der einzelnen Schichten zu einer Preform geschehen oder zusammen mit dem Verschmelzen der einzelnen Schichten der Preform vor dem Ausziehvorgang. Abhängig vom Fließverhalten der Frittenpaste kann es erforderlich sein, mehrmals Schichten per Siebdruck aufzubringen, um die erforderliche Schichtdicke zu erreichen.

Diese Herstellungsmöglichkeit der Preform ist selbstverständlich nicht auf das vorliegende Ausführungsbeispiel beschränkt.

Bei größeren Ausgangsschichtdicken $d_0(i)$ kann es erforderlich sein, den Ziehvorgang in mehreren Schritten durchzuführen. In diesem Fall können zwischen den einzelnen Schritten zu dem geschichteten Paket andere oder gleiche geschichtete Glaspakete hinzugefügt werden.

Der Stapel kann beispielsweise nach einem Ausziehschritt in mehrere Längsabschnitte aufgetrennt werden. Diese Abschnitte werden zu einem neuen Stapel übereinandergelegt, der wiederum den verbleibenden Ausziehschritten unterzogen wird.

Bei einer weiteren vorteilhaften Ausgestaltung des erfindungsgemäßen Verfahrens wird der Stapel während eines Ausziehschrittes auf eine Trommel aufgewickelt. Hierdurch kommen mehrere Lagen des Stapels übereinander zu liegen. Dieses mehrlagige System wird dann in einen oder mehrere Abschnitte zerteilt, und mindestens einer der Abschnitte wird als neuer Stapel den verbleibenden Schritten unterzogen.

Zur besseren Handhabbarkeit kann der Stapel zwischen zwei Schritten auf eine Trägerplatte aus thermoplastischem Material, insbesondere Glas oder Kunststoff, aufgebracht und mit dieser Trägerplatte den verbleibenden Schritten unterzogen werden. Die Trägerplatte kann auch bereits vor Beginn des ersten Ausziehschrittes mit dem Stapel verbunden werden.

Für den Fall, daß die Trägerplatte nach Beendigung der Ausziehschritte nicht zur Stabilisierung der hergestellten Interferenzschichtfolge benötigt wird, kann als Material der Trägerplatte ein lösliches Material wie das der Zwischenschichten gewählt werden, so daß die Trägerplatte in einem Lösungsmittel abgelöst werden kann.

Der ausgezogene Stapel kann, falls erforderlich, nach dem Abkühlen mechanisch in einzelne Teilchen oder Abschnitte aufgetrennt werden. Zur Herstellung von Interferenzpigmenten kann diese mechanische Zerteilung beispielsweise mit einer Schneidmühle erfolgen.

Als Glasmaterialien kommen oxidische und nichtoxidische Gläser in Frage. Die Auswahl der Glassorten sollte so erfolgen, daß neben den Brechungsindizes auch auf die Verträglichkeit der Gläser untereinander bezüglich thermischem Ausdehnungskoeffizienten und Interdiffusion, aber auch hinsichtlich Beständigkeit gegen Umwelteinflüsse geachtet wird.

Der gesamte Ausziehprozeß erfolgt mit einer ähnlichen Technik wie sie beim Faserziehen von optischen Lichtleitern eingesetzt wird. Überraschenderweise kann ein derartiges Verfahren auch auf die hier vorliegenden Pakete aus Glasplatten derart angewendet werden, daß nach dem Ausziehprozeß Glasbänder aus definierten Glasschichten entstehen. Die einzelnen Glasschichten können hinsichtlich Dicke und Brechzahl mit höchster Präzision so hergestellt werden, daß jedes gewünschte Interferenzverhalten erhalten werden kann.

Die Änderungen der Reflexion, Transmission, Absorption und Polarisation einer elektromagnetischen Welle im optischen Spektralbereich (UV, sichtbarer Spektralbereich, IR) beim Auftreffen auf die erfindungsgemäßen Interferenzsysteme können definiert und präzise eingestellt werden. Die so gefertigten Interferenzsysteme bestehen aus fest miteinander verschmolzenen Glasschichten. In den Schichten treten keine Poren auf, und die Schichten haften untereinander extrem gut. Damit unterliegen Interferenzsysteme, die gemäß der vorliegenden Erfindung gefertigt werden, nach dem Herstellungsprozeß keinerlei Änderungen der spektralen Eigenschaften.

Die Beständigkeit der Interferenzsysteme ist bei geeigneter Wahl der nach außen orientierten Gläser extrem gut gegen die meisten Umwelteinflüsse. Sie sind transparent und UV-beständig.

Der zur Verfügung stehende Bereich an hoch- und niedrigbrechenden, oxidischen und nichtoxidischen Gläsern ist zwar kleiner als bei den Materialien, welche für die traditionellen Beschichtungsverfahren verwendet werden. Allerdings sind Gläser mit nahezu jedem Brechungsindex zwischen den Extremwerten $n_d$ = 1,437 und $n_d$ = ca . 3,2 bekannt. Für die erfindungsgemäßen Zwecke können auch Gläser verwendet werden, die beim normalen Einsatz, d.h. bei größeren Dicken, nicht transparent, aber bei den erfindungsgemäßen Schichtdicken transparent sind.

Von besonderem Vorteil ist, daß die Brechungsindizes der verwendeten Ausgangsgläser im Vergleich zu herkömmlichen Beschichtungen um Größenordnungen präziser eingehalten werden können. Das gleiche gilt für die Schichtdicken.

Vorteilhaft ist weiterhin, daß mit dem erfindungsgemäßen Verfahren auf einfache Weise Interferenzsysteme mit sehr vielen Schichten hergestellt werden können, da der wichtigste Schritt des Verfahrens - der Ausziehvorgang - weitgehend unabhängig von der Anzahl der Glasplatten ist, aus denen die Preform hergestellt wurde.

Ein weiterer insbesondere wirtschaftlicher Vorteil besteht darin, daß die eingesetzten Materialien nahezu vollständig zur Bildung des Interferenzschichtsystems genutzt werden.

Bei einigen Anwendungen läßt sich ein dem Herstellungsverfahren der vorliegenden Erfindung inneliegender Vorteil nutzen, indem beim abschließenden Ausziehvorgang Teile des entstehenden "Bandes" mit unterschiedlicher Dicke gefertigt werden. Dies kann, wie bereits dargelegt, durch unterschiedliche Ausziehgeschwindigkeiten realisiert werden. Die entstehenden Interferenzsysteme haben dann alle die gleiche Schichtabfolge, aber unterschiedliche Dicken, was zur Verschiebung der Lage der spektralen Verteilung des Interferenzsystems führt. So verschiebt sich z. B. bei Linienfiltern die spektrale Lage des höchsten Durchlaßbereiches.

Durch geeignete Wahl der Anzahl der Schichtabfolge, der Brechungsindizes und der Schichtdicken kann nahezu jede gewünschte spektrale Verteilung der Reflexion bzw. Transmission des Interferenzsystems erreicht werden.

Das erfindungsgemäße Verfahren wird nachfolgend anhand mehrerer Ausführungsbeispiele in Verbindung mit den Figuren nochmals erläutert. Hierbei zeigen:

Figur 1    schematisch ein Beispiel für eine Vorrichtung zum Ausziehen einer Preform gemäß der Erfindung in perspektivischer Darstellung;

Figur 2    das Beispiel aus Figur 1 in Schnittdarstellung;

Figur 3    schematisch ein weiteres Beispiel für eine Vorrichtung zum Ausziehen von Preformen gemäß der Erfindung in perspektivischer Darstellung;

Figur 4    das Beispiel aus Figur 3 in Schnittdarstellung;

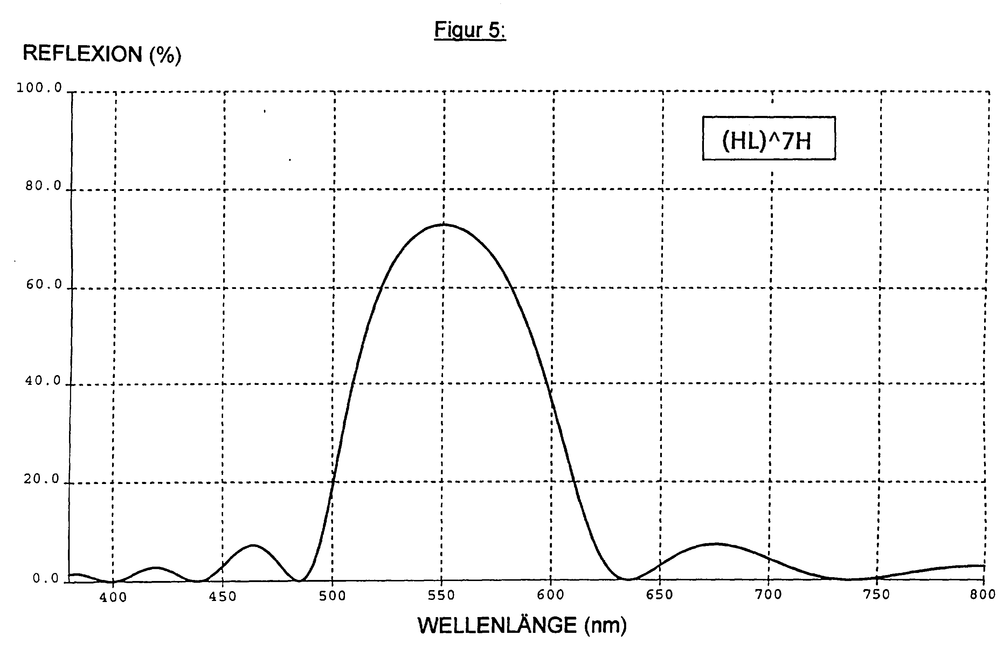

Figur 5    ein erstes Beispiel für die spektralen Eigenschaften (hier: Reflexion) einer erfindungsgemäß herstellbaren Interferenzschichtfolge;

Figur 6    ein zweites Beispiel für die spektralen Eigenschaften (hier: Reflexion) einer erfindungsgemäß herstellbaren Interferenzschichtfolge;

Figur 7    ein drittes Beispiel für die spektralen Eigenschaften (hier: Transmission) einer erfindungsgemäß herstellbaren Interferenzschichtfolge; und

Figur 8    ein viertes Beispiel für die spektralen Eigenschaften (hier: Reflexion) einer erfindungsgemäß herstellbaren Interferenzschichtfolge.

Bei dem nachfolgend dargestellten ersten, dritten und vierten Ausführungsbeispiel werden jeweils einzelne Glasplatten definierter Dicke und Brechzahl aufeinander gelegt und in einem Ofen fest miteinander verschmolzen. Im zweiten Ausführungsbeispiel werden auf einer Glasplatte beidseitig Glasschichten mittels Siebdruck aufgebracht. Die dabei entstehende Preform wird anschließend thermisch zu dünnen Interferenzschichtbändern ausgezogen.

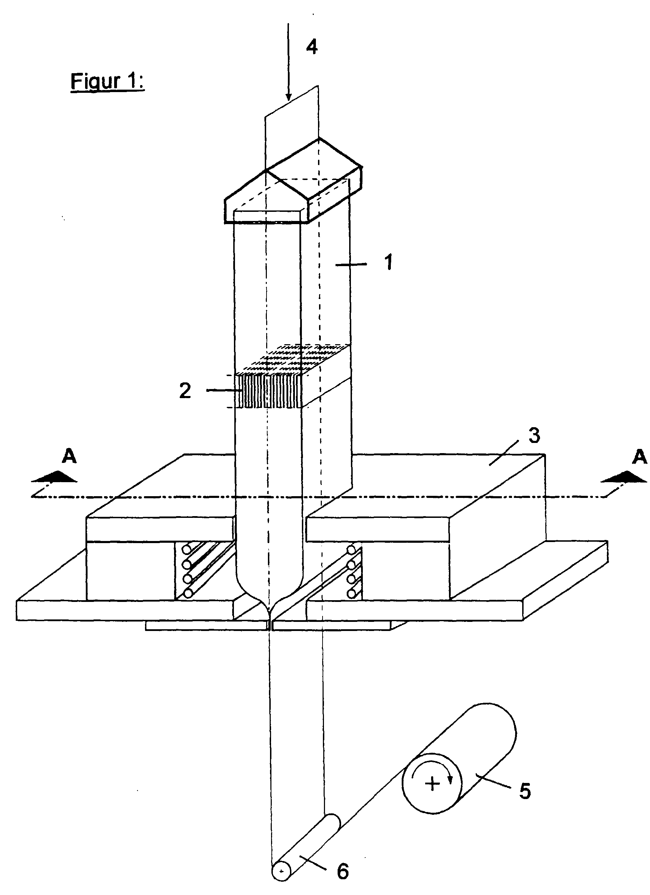

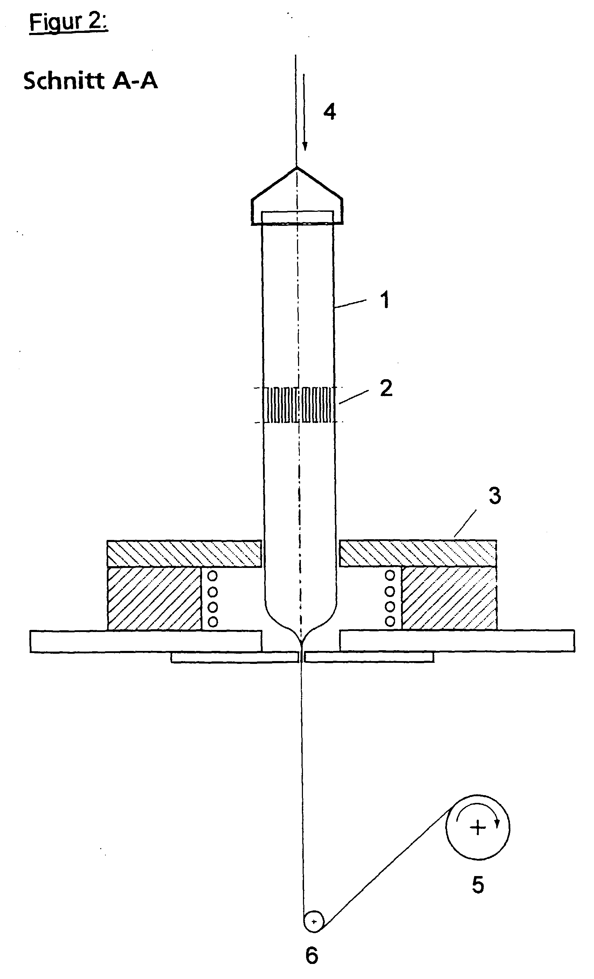

Figur 1 zeigt schematisch ein Beispiel für eine Vorrichtung zum Ausziehen einer derartigen Preform 1 in perspektivischer Darstellung (in Figur 2 im Schnitt). Die Preform 1 besteht aus einem Stapel der einzelnen Glasplatten, wie im Querschnitt 2 angedeutet. Sie wird durch einen Ziehofen 3 geführt, in der sie auf eine Temperatur oberhalb der Transformationstemperatur der verwendeten Gläser erwärmt wird. Die Nachführung ist durch den Pfeil 4 angedeutet. Die Preform 1 wird dabei mittels einer Ziehvorrichtung 5 über die Umlenkrolle 6 auf die gewünschte Banddicke ausgezogen. Nachführgeschwindigkeit und Ziehgeschwindigkeit werden dabei so aufeinander abgestimmt, daß diese Dicke exakt erreicht wird.

Im dargestellten Fall handelt es sich um einen diskontinuierlichen Ziehprozeß, da nach dem Ausziehen einer Preform die nächste Preform zunächst in die Vorrichtung eingesetzt werden muß, bevor der Ziehvorgang erneut wieder aufgenommen werden kann.

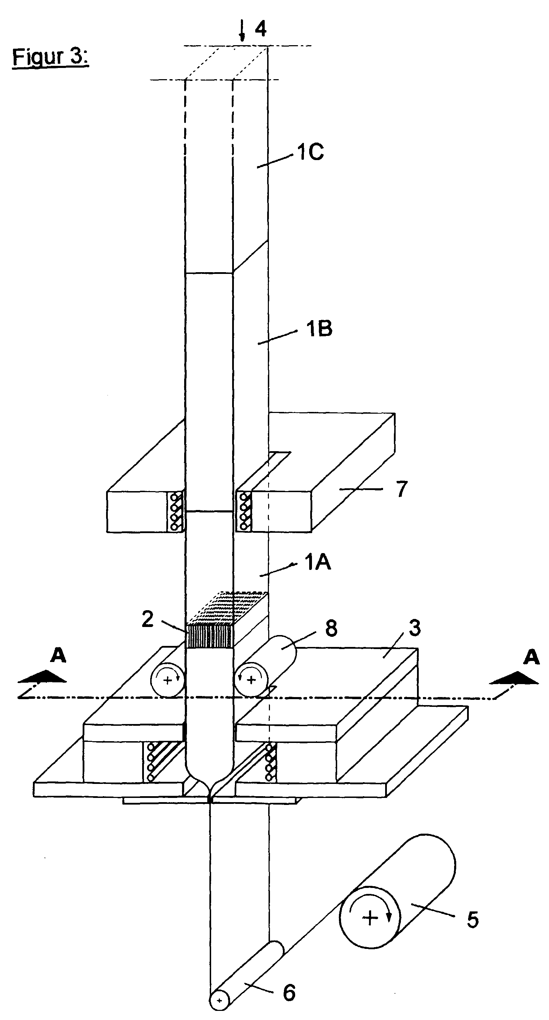

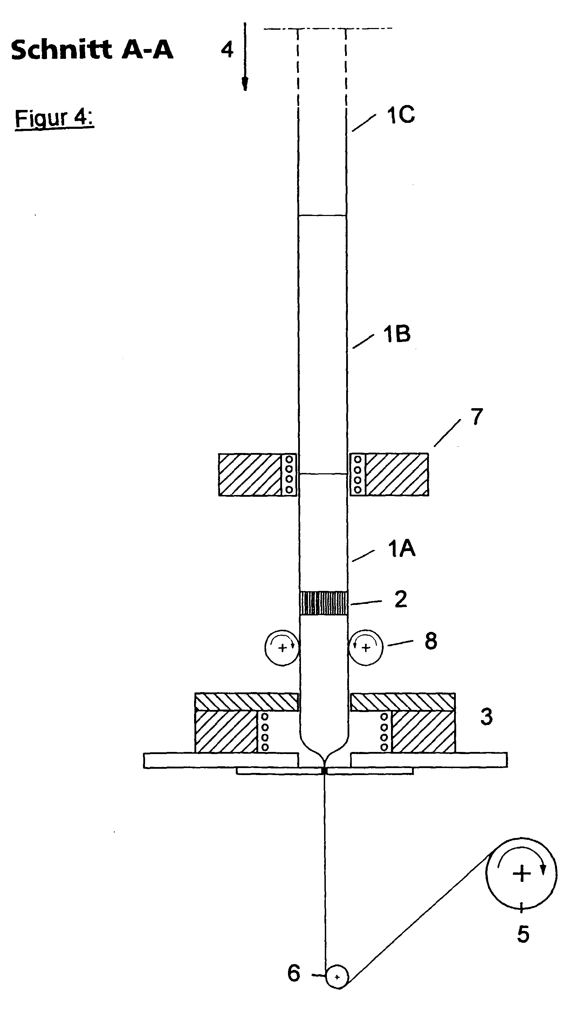

Durch Verschmelzen von in Ziehrichtung hintereinander angeordneten einzelnen Preformen vor dem Ausziehvorgang kann der Ziehprozeß auch kontinuierlich gestaltet werden, so daß keine technisch und wirtschaftlich ungünstigen Pausen entstehen. Ein Beispiel hierfür zeigt Figur 3 in perspektivischer Darstellung (Figur 4 im Schnitt). Hier werden drei einzelne Preforms 1A, 1B und 1C vor dem Durchgang durch den Ziehofen 3 mittels einer Anschmelzvorrichtung 7 miteinander verbunden. Der Preformquerschnitt 2 mit den einzelnen Glasplatten ist wiederum angedeutet. Die Nachführung erfolgt hier durch die Andruckrollen 8. Die Ziehvorrichtung 5 ist in Form einer Wickelmaschine ausgestaltet.

Werden sehr dünne Ausgangsglasplatten eingesetzt, die kommerziell bis zu Dicken von 0,03 mm erhältlich sind, so kann die Preform in einem Schritt um den Faktor 1000 auf das Endmaß einer Dicke von 30 nm pro Interferenzschicht ausgezogen werden.

Geht man von Glasplatten mit 1 mm Dicke für die Preform aus, dann muß die Preform um etwa den Faktor 10000 ausgezogen werden, damit die Schichtdicken etwa 100 nm betragen. Interferenzfilter mit optischer Wirkung im sichtbaren Spektralbereich haben typischerweise derartige Schichtdicken.

Dies ist jedoch nicht in einem Ziehvorgang zu bewältigen, so daß in diesem Fall vorzugsweise ein doppelter oder ein dreifacher Ziehvorgang durchgeführt wird. Nach jedem Ziehvorgang kann man das ausgezogene Band in geeignete Abschnitte auftrennen, die jeweils auf eine dickere Trägerplatte aus Glas aufgelegt und mit ihr erneut ausgezogen werden. Eine weitere Möglichkeit besteht darin, viele Abschnitte des ersten Ausziehvorganges aufeinander zu legen und so den weiteren Ausziehschritten zu unterwerfen, um Schichtsysteme mit sehr vielen Schichten zu erzeugen.

Bei Systemen mit sehr vielen Schichten, die aus einer sich wiederholenden Folge von Schichten bestehen, kann man eine Preform - bestehend aus einer einzelnen Abfolge oder einem Mehrfachen derselben - zu einem Band ausziehen, das in mehreren Lagen auf eine Trommel aufgewickelt wird. Der mehrlagige Mantel wird abgenommen, aufgeschnitten, plan ausgelegt und bildet eine neue Preform, die wiederum zum endgültig dimensionierten Interferenzschichtsystem ausgezogen wird.

Zur Herstellung einzelner Interferenzteilchen, z.B. Perlmuttglanzpigmente, wird das ausgezogene bandförmige Interferenzsystem abschließend in einzelne Teilchen abgelängt.

Für Anwendungen, bei denen nur Schichtpakete ohne Substrat gefordert sind, ist es vorteilhaft, das Trägerglas der Preform beim letzten Ziehvorgang aus einer Glassorte zu wählen, welche in einem weiteren Verfahrensschritt abgelöst werden kann (z.B. wasserlöslich), oder aus Kunststoff, zum Beispiel Teflon. Ein Trägerglas ist selbstverständlich nicht in jedem Falle erforderlich, sondern dient lediglich der besseren Handhabbarkeit bei sehr dünnen Schichtpaketen.

Es können auch mehrere Schichtpakete mit leicht löslichen Zwischenschichten zu einer Preform verbunden werden. Nach dem Ausziehvorgang werden diese aufgelöst, so daß die Interferenzsysteme dann einzeln vorliegen. Auch das einseitige Aufbringen des Schichtsystems auf eine glasige Grundplatte oder auf Glas-KunststoffVerbunde ist möglich.

Eine weitere Verfahrensvariante besteht im Aufschmelzen einzelner Schichtpakete auf eine Trägerglasplatte quer zur Ziehrichtung. Nach dem Ausziehen dieser Preform entsteht so ein Band von vielen nebeneinander angeordneten Interferenzschichtsystemen, die als Interferenzfilter einsetzbar sind.

Interferenzverlaufsfilter sind Filter, bei denen die Schichtdicken aller Schichten des Filters in eine Richtung (in der Ebene der Schichten des Filters) ansteigen oder abnehmen. Meist wird ein linearer Verlauf der Schichtdickenänderung gewählt. Mit dem Ort entlang des Dickengradienten ändert sich die spektrale Eigenart des Filters, da sie eine Funktion der Schichtdicken ist. Interferenzlinienfilter mit einem solchen Dikkengradienten können als einfache Monochromatoren verwendet werden. Die Preform kann zu diesem Zweck quer zur Ziehrichtung keilförmig deformiert werden. Anschließend wird ein keilförmiges Gegenstück als Trägerglas der Preform zugefügt, um wieder eine gleichmäßig dicke Preform zu erhalten. Es können unterschiedliche Querschnittsprofile senkrecht zur Ziehrichtung, z.B. wellenförmige, verwendet werden, wobei nach dem Ausziehprozeß das Querschnittsprofil kongruent und die Schichtenfolge erhalten bleiben.

Nachfolgend werden für bevorzugte Anwendungen von Interferenzschichtsystemen Ausführungsbeispiele zu deren Herstellung angegeben. Zur Herstellung der Preformen wurden Glasplatten mit abwechselnd hohem (H) und niedrigem Brechungsindex (L) zusammengeschmolzen. Die verschiedenen Interferenzschichtsysteme sind symmetrisch aufgebaut. Die äußere Begrenzung bilden immer hochbrechende Glasplatten.

Das Ausziehen dieser Preformen erfolgt jeweils so, daß $\lambda/4$-Interferenzschichten entstehen, wobei beispielhaft die Schwerpunktwellenlänge $\lambda = 550$ nm herangezogen wurde.

Das erste Beispiel zeigt die Herstellung eines Interferenzsystems für die Verwendung als Effektfilter (z.B. Perlmutt-, Metallglanz-Pigmente).

Als hochbrechendes Glas (H) für das Basispaket aus 15 Glasplatten wird SF11 (Schott Glas) mit einem Brechungsindex von $n_d = 1,7847$ und als niedrigbrechendes Glas (L) D263 (DESAG) mit $n_d = 1,5231$ verwendet.

Zunächst wird folgendes Schichtpaket aus 15 Glasplatten hergestellt: HLHLHLHLHLHLHLH. Die Dicke des hochbrechenden Glases SF11 (H) beträgt 0,085 mm und die des niedrigbrechenden Glases D263 (L) 0,1 mm. Dieses Plattenpaket besteht also aus 7 L- und 8 H-Platten und besitzt eine Gesamtdicke von 1,38 mm. Für den Aufbau der Preform werden 4 derartige Schichtpakete verwendet und jeweils durch ein leicht säurelösliches Trennglas (hier: Borosilicatglas) getrennt, so daß folgende Anordnung resultiert:

| | |
|---|---|
| Schichtpaket | 1,38 mm |
| Trennglas | 1 mm |
| Schichtpaket | 1,38 mm |
| Trennglas | 1 mm |
| Schichtpaket | 1,38 mm |
| Trennglas | 1 mm |
| Schichtpaket | 1,38 mm. |

Diese Anordnung wird viermal mit jeweils einem Trennglas übereinander angeordnet. Insgesamt besteht die resultierende Preform dann aus 16 Schichtpaketen und 15 Trenngläsern mit einer Gesamtschichtdicke von 37,08 mm. Die Ausgangsbreite der Preform liegt bei 50 mm und die Ausgangslänge bei 90 mm. Durch den diskontinuierlichen Ziehprozeß in Längsrichtung bei etwa 700 °C verschmelzen die Glasplatten miteinander, und die Preform wird um den Faktor 1107,665 auf eine Gesamtdicke von 33,5 μm ausgezogen.

Anschließend wird das erhaltene Glasband mechanisch zerkleinert und durch Auflösung der Trenngläser in die einzelnen Interferenzfilter aufgetrennt. Diese haben eine Dicke von jeweils 1,248 μm und sind 45,14 μm breit. Die Einzelschichtdicken der Gläser betragen für das H-Glas SF11 77,04 nm und für das L-Glas D263 90,28 nm. Die Interferenzfilter bzw. -pigmente haben eine hohe Reflexion bei 550 nm mit Reflexionswerten über 70%. Dies ist aus Figur 3 zu erkennen, die die Abhängigkeit des Reflexionsgrades von der Wellenlänge für die hergestellte Interferenzschichtfolge zeigt.

Das zweite Beispiel zeigt ebenfalls die Herstellung eines Interferenzsystems für die Verwendung als Effekt-Filter (Perlmutt-, Metallglanz-Pigmente) wie beim ersten Beispiel. Anders als beim ersten Beispiel soll eine sehr hohe Reflexion im blauen Spektralbereich erzielt werden. Als niedrigbrechende Schicht dient das Glas D263 wie beim ersten Beispiel. Die Ausgangsdicken liegen ebenfalls bei 0,1 mm. Per Siebdruck wird auf diese Scheiben das hochbrechende Glas SF11 in geeigneter Dicke aufgebracht. Vorteilhaft ist hierbei, daß es im Siebdruckverfahren einfach ist, unterschiedliche Schichtdicken zu erreichen (Fadenstärke des Siebes). Auf diese Weise läßt sich die Breite einer Reflexionsbande vergrößern. Man setzt zwei Interferenzschichtsysteme mit unterschiedlicher Schichtdicke aufeinander, deren Reflexionsgebiete einander überlappen. Ist die geforderte Verbreiterung deutlich kleiner als 50 %, dann genügt es, nur die hoch- oder niedrigbrechende Schicht zu ändern, um eine Verschiebung des Reflexionsgebietes zu erreichen.

Das Interferenzsystem besteht aus 41 Schichten:

- 10 mal SF11 mit d=85,34 $\mu$m auf D263 mit d=100 $\mu$m
- 10 mal SF11 mit d=96,785 $\mu$m auf D263 mit d=100 $\mu$m
- 1 mal SF11 mit d=96,785 $\mu$m (d.h., die letzte D263-Scheibe muß auf beiden Seiten mit SF11 belegt sein)

Das Gesamtpaket hat dann eine Dicke von 3918 $\mu$m = 3,918 mm.

Acht solcher Pakete werden mit jeweils einer 1 mm dicken Trennglasschicht zu der Preform vereinigt. Die Breite der Preform ist 50 mm und die Länge 90 mm. Wie beim ersten Beispiel werden die einzelnen Scheiben der Preform miteinander verschmolzen. Dann wird sie um den Faktor 1350,80 ausgezogen.

Anschließend wird - wie beim ersten Beispiel - das erhaltene Glasband mechanisch zerkleinert und durch Auflösung der Trenngläser in die einzelnen Interferenzfilter aufgeteilt.

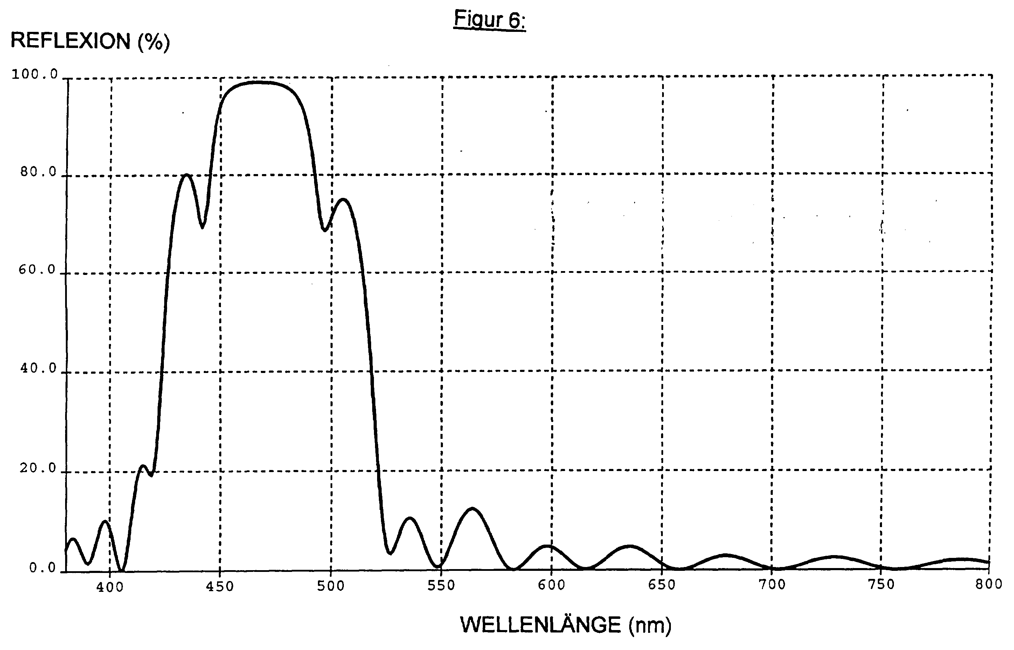

In der Figur 6 ist die Reflexion als Funktion der Wellenlänge aufgetragen. Man erkennt die hohe Reflexion im blauen Spektralbereich.

Das dritte Beispiel zeigt die Herstellung eines Interferenzschichtsystems für die Verwendung als Linienfilter.

Das Filter soll makroskopische Abmessungen von ca. 2 cm x 2 cm haben, um in verschiedenen optischen Anwendungen aus einem Gemisch von Wellenlängen, wie sie typische Strahlungsquellen aufweisen, die gewünschte Wellenlänge auszufiltern. Im Beispiel wird als Schwerpunktswellenlänge $\lambda$ = 550 nm gewählt. Das Filter besteht aus 59 hoch- und niedrigbrechenden Schichten. Als Aufbau des Linienfilters wird beispielhaft ein sogenannter "Zwei-Cavity" Typ mit folgender Schichtfolge gewählt: $(LH)_7LHH(LH)_{12}LHH(LH)_7L$. L steht für eine niedrigbrechende Schicht aus dem Glas D263 ($n_d$ = 1,5231) mit der optischen Schichtdicke n • d = 550/4 nm . H steht für eine höherbrechende Schicht aus dem Glas SF11 ($n_d$ = 1,7847) mit der optischen Schichtdicke n • d = 550/4 nm .

Die Preform wird in drei Schritten je um den Faktor 10,347 ausgezogen, was insgesamt dem Faktor 1107,7 entspricht. Die niedrigbrechenden Glasscheiben der Preform sind 0,1 mm dick, die hochbrechenden Glasscheiben sind 0,08534 mm dick.

Im ersten Schritt werden die 59 Scheiben der Preform auf eine Trägerglasscheibe aus D263 von 10 mm Dicke gelegt und gemeinsam um den Faktor 10,347 ausgezogen. Die Ausgangsdicke von Preform und Trägerglas beträgt 15,45 mm, die Breite wurde mit 300 mm festgelegt. Nach dem ersten Ziehvorgang werden Streifen von 300 mm Länge abgeschnitten und auf ein Trägerglas aus D263 (300 mm x 290 mm) dergestalt aufgelegt, daß sie quer zur Ziehrichtung des zweiten Ziehvorgangs angeordnet sind, 10 Streifen von 28,99 mm Breite auf dem 1 mm dicken Trägerglas.

Im zweiten Schritt wird diese "neue" Preform auch um den Faktor 10,347 ausgezogen. Wie nach dem ersten Ziehvorgang werden nun 300 mm lange Streifen abgeschnitten und erneut auf ein Trägerglas aus D263 quer zum dritten Ziehvorgang gelegt. Das Trägerglas ist 10 mm dick und hat eine Breite von 300 mm und eine Länge von 290 mm.

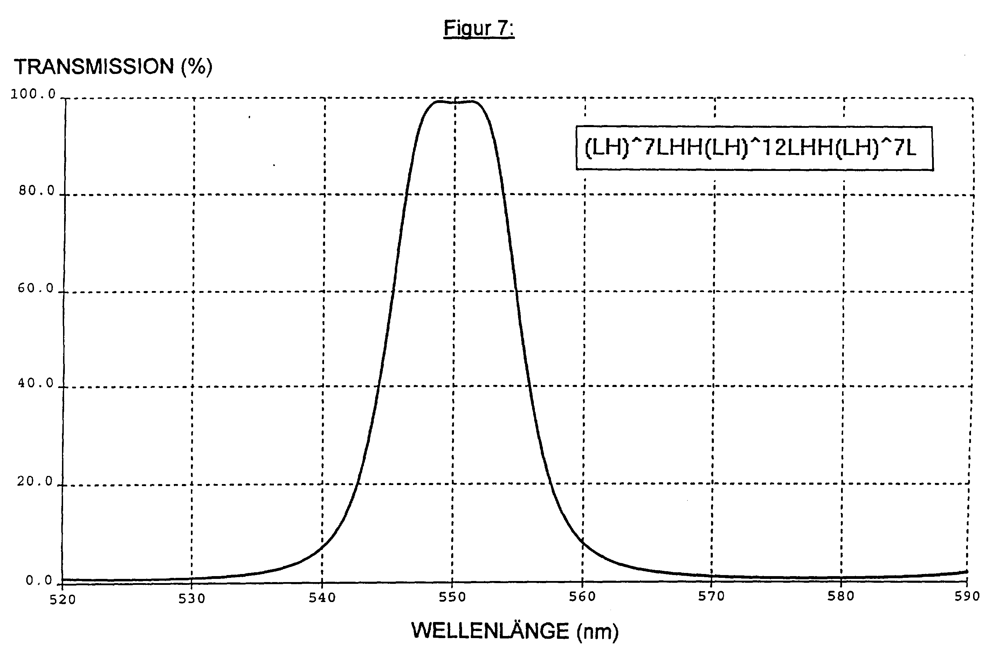

Nach dem dritten Ziehvorgang um den gleichen Faktor liegt dann ein Band von 28,99 mm Breite mit dem beschriebenen Interferenzschichtsystem auf einem Trägerglas D263 von ca. 1 mm Dicke vor. Daraus werden die gewünschten Filter abgeschnitten und auf das geforderte Endmaß gebracht. Die spektralen Eigenschaften eines derartigen Filters sind in Figur 7 als Transmissionsgrad in Abhängigkeit von der Wellenlänge dargestellt.

Es ist jedoch zu beachten, daß bei der Herstellung die "Nahtstellen" der aufgelegten Streifen verworfen werden müssen.

Das vierte Beispiel zeigt die Herstellung eines Interferenzsystems für die Verwendung als Interferenzteilchen (flakes) für fälschungssichere Produkte (counterfeitings), wie beispielsweise Banknoten, Dokumente oder Lacke.

Die Einzelpreformen der sogenannten Sicherheitsflakes bestehen aus Schichtpaketen, die sich aus 25 Glasplatten zusammensetzen. Es werden das hochbrechende Glas BaF4 (Schott Glas) mit einem Brechungsindex von $n_d$ = 1,60562 (H) und einer Dicke von 0,09486 mm sowie das niedrigbrechende Glas D263 (L) mit einer Dicke von 0,1 mm verwendet. Diese Gläser werden abwechselnd nach folgendem Schema aufgeschichtet: $(HL)_{12}H$. Die 12 L-Glasplatten haben eine Gesamtdicke von 1,2 mm und die H-Gläser von 1,23318 mm. Die Gesamtdicke des Einzelschichtpaketes beträgt 2,433 mm. Es werden 10 dieser Einzelschichtsysteme bzw. Einzelpreformen übereinander angeordnet, mit jeweils einem lösbaren Trennglas von 1 mm Dicke dazwischen (insgesamt 9 Trenngläser). Die Gesamtdicke der Endpreform beträgt 33,33 mm, die Breite 75 mm und die Länge 25 mm. Durch einen diskontinuierlichen Ziehprozeß bei etwa 750 °C in Längsrichtung wird die Preform um den Faktor 1107,665 auf die Enddicke 30,1 $\mu$m und die Endbreite 67,7 $\mu$m ausgezogen.

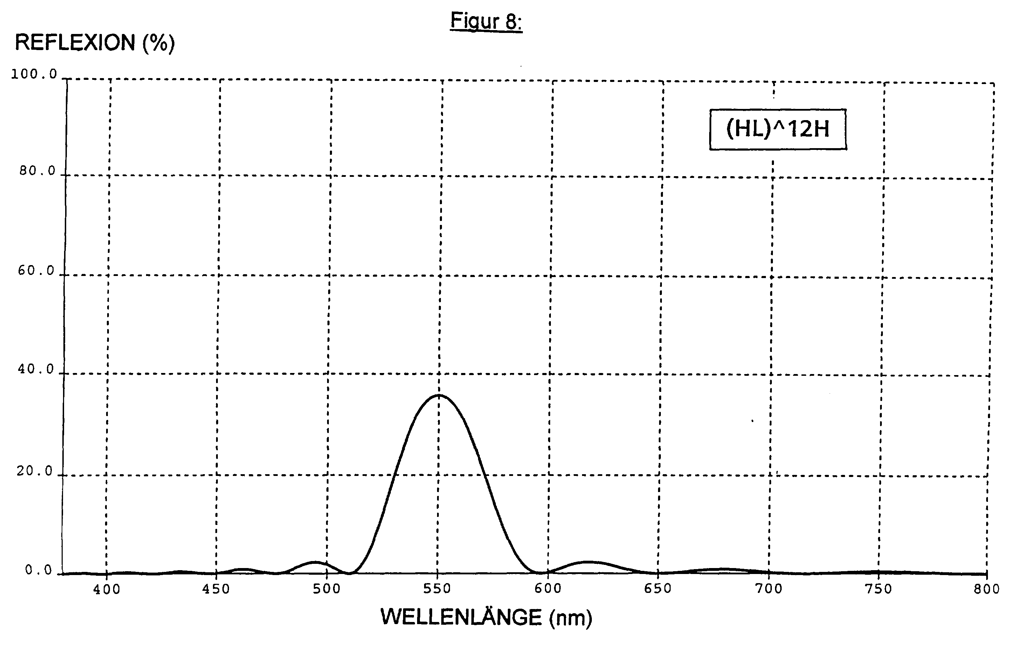

Nach mechanischer Zerkleinerung und Auflösen der Trenngläser betragen die Enddicken des L-Glases 90,28 nm und die des H-Glases 85,64 nm. Diese Sicherheits-Interferenzflakes besitzen eine definierte Reflexion bei 550 nm mit Reflexionswerten von über 35%, wie aus Figur 8 ersichtlich.

**Patentansprüche**

1. Verfahren zur Herstellung von Interferenzschichtfolgen aus Schichten i vorbestimmter Dicken d(i) und Brechungsindizes n(i) mit folgenden Schritten:

   - Bereitstellen eines Stapels aus zumindest zwei Schichten i aus Gläsern mit den Brechungsindizes n(i) und Dicken $d_0(i)$, die um jeweils den gleichen Faktor größer als die vorbestimmten Dicken d(i) sind;
   - Erwärmung des Stapels auf eine Temperatur oberhalb der Transformationstemperatur der Gläser der Schichten;
   - Ausziehen des Stapels während oder nach der Erwärmung derart, daß die einzelnen Schichten die vorbestimmten Dicken d(i) erreichen;
   - Abkühlen des ausgezogenen Stapels.

2. Verfahren nach Anspruch 1,
   dadurch gekennzeichnet,
   daß das Bereitstellen des Stapels durch Übereinanderlegen einzelner Platten aus Glas erfolgt.

3. Verfahren nach Anspruch 1 oder 2,
   dadurch gekennzeichnet,
   daß die vorbestimmten Dicken d(i) über die Geschwindigkeit des Ausziehens eingestellt werden.

4. Verfahren nach Anspruch 3,
   dadurch gekennzeichnet,
   daß während des Ausziehens die Geschwindigkeit des verändert wird, so daß aus einem Stapel Interferenzschichtfolgen unterschiedlicher Dicken oder eine Interferenzverlaufsschichtfolge gefertigt werden.

5. Verfahren nach einem der Ansprüche 1 bis 4,
   dadurch gekennzeichnet,

daß der Stapel quer zur Richtung des Ausziehens einen vorgegebenen Dickenverlauf der Schichten aufweist.

6. Verfahren nach einem der Ansprüche 1 bis 5,
   dadurch gekennzeichnet,
   daß der Stapel die Schichten mehrerer Interferenzschichtfolgen übereinanderliegend enthält, wobei jeweils eine lösliche Zwischenschicht aus thermoplastischem Material die Schichten einer Interrenzschichtfolge von den Schichten einer darüberliegenden Interferenzschichtfolge trennt.

7. Verfahren nach Anspruch 6,
   dadurch gekennzeichnet,
   daß das Bereitstellen des Stapels durch Übereinanderlegen einzelner Platten aus Glas erfolgt, wobei die Schichten und/oder die Zwischenschichten teilweise oder vollständig pulvertechnologisch oder mittels Siebdruckverfahren aufgebracht werden.

8. Verfahren nach Anspruch 6 oder 7,
   dadurch gekennzeichnet,
   daß die Zwischenschichten nach dem Abkühlen in einem Lösungsmittel gelöst werden.

9. Verfahren nach einem der Ansprüche 1 bis 8,
   dadurch gekennzeichnet,
   daß das Ausziehen in mehreren Schritten erfolgt.

10. Verfahren nach Anspruch 9,
    dadurch gekennzeichnet,
    daß zwischen zwei Schritten ein weiterer Stapel für eine weitere oder die gleiche Interferenzschichtfolge auf den Stapel aufgebracht wird.

11. Verfahren nach Anspruch 9,
    dadurch gekennzeichnet,
    daß der Stapel zwischen zwei Schritten in Abschnitte aufgeteilt wird, diese Abschnitte zu einem neuen Stapel übereinandergelegt werden, und der neue Stapel den verbleibenden Schritten unterzogen wird.

12. Verfahren nach Anspruch 9,
    dadurch gekennzeichnet,
    daß der Stapel während eines Ausziehschrittes zur Bildung mehrerer Lagen auf eine Trommel aufgewickelt wird, das entstehende mehrlagige System in einen oder mehrere Abschnitte zerteilt wird, und mindestens einer der Abschnitte als neuer Stapel den verbleibenden Schritten unterzogen wird.

13. Verfahren nach einem der Ansprüche 9 bis 12,
    dadurch gekennzeichnet,
    daß der Stapel zwischen zwei Schritten auf eine Trägerplatte aus thermoplastischem Material, insbesondere Glas oder Kunststoff, aufgebracht und mit dieser Trägerplatte den verbleibenden Schritten unterzogen wird.

14. Verfahren nach einem der Ansprüche 1 bis 13, dadurch gekennzeichnet, daß der Stapel auf einer Trägerplatte aus thermoplastischem Material, insbesondere Glas oder Kunststoff, bereitgestellt und mit dieser Trägerplatte ausgezogen wird.

15. Verfahren nach Anspruch 13 oder 14, dadurch gekennzeichnet, daß die Trägerplatte aus löslichem Material besteht, das nach dem Abkühlen in einem Lösungsmittel gelöst wird.

16. Verfahren nach einem der Ansprüche 1 bis 15, dadurch gekennzeichnet, daß der ausgezogene Stapel nach dem Abkühlen mechanisch in einzelne Teilchen oder Abschnitte aufgetrennt wird.

17. System aus mehreren übereinander liegenden Interferenzschichtfolgen, wobei sich jede Interferenzschichtfolge aus mehreren Schichten i vorbestimmter Dicken d(i) und Brechungsindizes n(i) zusammensetzt, die aus Glas bestehen und miteinander verschmolzen sind, und wobei die Interferenzschichtfolgen jeweils durch eine Zwischenschicht aus thermoplastischem Material, das in einem die weiteren Schichten nicht lösenden Lösungsmittel löslich ist, voneinander getrennt sind.

18. Interferenzschichtfolge aus mehreren Schichten i vorbestimmter Dicken d(i) und Brechungsindizes n(i), bei dem die Schichten aus Glas bestehen und miteinander verschmolzen sind.

Figur 1:

**Figur 2:**

**Schnitt A-A**

Figur 3:

**Schnitt A-A**

Figur 4:

1C

1B

7

1A

2

8

3

5

6

Figur 5:

REFLEXION (%)

(HL)^7H

WELLENLÄNGE (nm)

EP 0 995 722 A1

Figur 6:

Figur 7:

Figur 8:

REFLEXION (%)

WELLENLÄNGE (nm)

EP 0 995 722 A1

Europäisches
Patentamt

**EUROPÄISCHER RECHERCHENBERICHT**

Nummer der Anmeldung

EP 99 12 0392

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 1 032 936 A (KURZ) 1. Juli 1953 (1953-07-01) * das ganze Dokument * --- | 1,2,17 | C03B23/037 |
| A | EP 0 105 701 A (CORNING GLASS WORKS) 18. April 1984 (1984-04-18) * das ganze Dokument * --- | 1,17 | |
| A | GB 2 086 876 A (DAINICHI-NIPPON CABLES LTD.) 19. Mai 1982 (1982-05-19) * das ganze Dokument * --- | 1,17 | |
| A | US 3 941 474 A (KITANO) 2. März 1976 (1976-03-02) * Abbildung 17 * ----- | 1,17 | |

| RECHERCHIERTE SACHGEBIETE (Int.Cl.7) |
|---|
| C03B |

Der vorliegende Recherchenbericht wurde für alle Patentansprüche erstellt

| Recherchenort | Abschlußdatum der Recherche | Prüfer |
|---|---|---|
| DEN HAAG | 1. Februar 2000 | Van den Bossche, W |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 12 0392

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2000

| Im Recherchenbericht angeführtes Patentdokument | Datum der Veröffentlichung | Mitglied(er) der Patentfamilie | Datum der Veröffentlichung |
|---|---|---|---|
| FR 1032936 A | 01-07-1953 | US 2652660 A | 22-09-1953 |
| EP 105701 A | 18-04-1984 | US 4486213 A | 04-12-1984 |
| | | US 4479819 A | 30-10-1984 |
| | | JP 1618447 C | 12-09-1991 |
| | | JP 2040619 B | 12-09-1990 |
| | | JP 59083951 A | 15-05-1984 |
| GB 2086876 A | 19-05-1982 | JP 58007106 A | 14-01-1983 |
| | | JP 57042008 A | 09-03-1982 |
| | | AU 549382 B | 23-01-1986 |
| | | AU 7532981 A | 08-04-1982 |
| | | BR 8108767 A | 06-07-1982 |
| | | CA 1175234 A | 02-10-1984 |
| | | FR 2510545 A | 04-02-1983 |
| | | WO 8200898 A | 18-03-1982 |
| | | NL 8120309 T | 01-07-1982 |
| | | SE 437083 B | 04-02-1985 |
| | | SE 8202613 A | 27-04-1982 |
| | | US 4452623 A | 05-06-1984 |
| | | KR 8402444 B | 28-12-1984 |
| US 3941474 A | 02-03-1976 | US 3923486 A | 02-12-1975 |
| | | BE 729880 A | 18-08-1969 |
| | | DE 1913358 A | 20-11-1969 |
| | | FR 2004043 A | 14-11-1969 |
| | | GB 1266521 A | 08-03-1972 |
| | | NL 6903986 A,B, | 17-09-1975 |

EPO FORM P0461

Für nähere Einzelheiten zu diesem Anhang : siehe Amtsblatt des Europäischen Patentamts, Nr.12/82